# EUROPÄISCHE PATENTANMELDUNG

(11) **EP 2 565 244 A1**
(43) Veröffentlichungstag der Anmeldung: **06.03.2013**
(21) Anmeldenummer: 11179595.1
(22) Anmeldetag: 31.08.2011
(51) Int. Cl.: C09J 7/00, B32B 27/12

(54) **Doppelseitig selbstklebendes Band**

(71) Anmelder: Weiss Chemie + Technik GmbH & Co. KG, 35708 Haiger (DE)
(72) Erfinder: Jäger, Ralf, 57299 Burbach (DE)
(74) Vertreter: Knefel, Cordula

(57) **Zusammenfassung**

Die Erfindung betrifft ein doppelseitig selbstklebendes Band, wobei das Klebeband mindestens drei fest miteinander verbundene, jeweils ausgehärtete Funktionsschichten aufweist, wobei die mindestens drei Funktionsschichten jeweils als Klebeschicht ausgebildet sind, dass die wenigstens zwei auf der wenigstens einen mittleren Funktionsschicht angeordneten Funktionsschichten eine Oberflächenklebrigkeit (Tack) von wenigstens 30 Newton (N) bei +20 °C gemäß DIN EN 1719 aufweisen, und wobei die wenigstens eine mittlere Funktionsschicht eine Schälfestigkeit Fmax bei Reißgeschwindigkeit 300 mm/min, bei +20 °C von wenigstens 60 N/25 mm aufweist, nach DIN EN 28510-2.

## Beschreibung

Die Erfindung betrifft ein doppelseitig selbstklebendes Band.

Aus der Praxis ist bekannt, eine luft- und winddichte sowie regensichere Verklebung von ein- und mehrlagigen Folien im Trockenbau (zur Abdichtung von Dampfbremsen und -sperren) sowie diffusionsoffenen Bahnen (bei Dach- und Fassadenabdichtung) und der Fugenabdichtung (bei zum Beispiel Fenster- und Türenmontage) durchzuführen, um einen kontrollierten Energieverbrauch zu gewährleisten. Im Bereich von Folienüberlappungen werden die Folien neben der mechanischen Fixierung an den üblichen Bauwerksuntergründen in der Regel mit einseitig klebenden Klebebändern überlappend abgeklebt, um die nötige Luftdichtheit zu erreichen. Bei der aus der Praxis bekannten Anschlussverklebung, bei der Folien auf Bauwerksuntergründen angeordnet werden, werden die Dichtheitsschichten gemäß einer ersten bekannten Ausführungsform mit nicht ausgehärteten Klebedichtmassen auf Dispersionsbasis hergestellt. Hier erfolgt eine Aushärtung durch die physikalische Trocknung. Eine zweite Ausführungsform einer aus der Praxis bekannten Anschlussverklebung sieht reaktive Klebedichtmassen, zum Beispiel auf Polyurethan-, Silikon- oder silanterminierter Polymer-Basis vor, bei denen eine Aushärtung durch Reaktion mit Feuchtigkeit erfolgt. Diese aus der Praxis bekannten Verfahren arbeiten mit Klebedichtmassen, die in Kartuschen bevorratet werden. Diese Klebedichtmassen auf Dispersions- und reaktiver Basis benetzen die Bauwerksuntergründe gut. Sie weisen je nach Anwendung eine zu den jeweiligen eingesetzten Folien gute Haftung auf und erreichen nach Aushärtung dauerhaft alterungsbeständige Verbundfestigkeiten. Die Verarbeitung dieser Massen, die in Kartuschen angeordnet sind, ist in der Anwendung jedoch eingeschränkt bezüglich der nicht kontrollierbaren Durchhärtezeiten (Aushärtung) und kann in Abhängigkeit der Umgebungsbedingungen Materialfeuchtigkeit und Materialsaugfähigkeit bis zum Erreichen der nötigen Anwendungsfestigkeit bis zu einigen Tagen dauern. Teilweise sind diese aus der Praxis bekannten Massen während der Verarbeitung zum Beispiel bei feuchtem Wetter nur bedingt einsetzbar.

Aus dem Stand der Technik (DE 203 15 592 U1) ist ein einseitig beziehungsweise doppelseitig klebendes Band bekannt, welches zum Beispiel auf der Basis synthetischer Polymere hergestellt ist. Hierbei ist die Härtung der Klebemasse, so weit es geht, erfolgt. Eine Resthärtung erfolgt zum Teil durch zusätzliche UV-Strahlung oder Luftfeuchte während der Verarbeitung. Diese zum Stand der Technik gehörenden klebenden Massen erreichen in der Regel jedoch deutlich geringere sowie weniger alterungsstabile Verbundfestigkeiten als die oben beschriebenen Massen.

Eine weitere aus der Praxis bekannte Art der Anschlussverklebung besteht aus Klebebändern oder Klebedichtmassen auf Butyl- oder Bitumen-Basis. Diese Massen sind hierbei weitestgehend ausgehärtet, die restliche Härtung erfolgt durch Abgabe geringer Lösemittelanteile. Diese Massen kommen in der Praxis nur sehr eingeschränkt für die oben genannten Anwendungen zum Einsatz, da diese Massen bei Anwendungen insbesondere bei Temperaturbereichen größer +25 °C nur eingeschränkt aufgrund ihrer dann deutlich nachlassenden Verbundfestigkeiten eingesetzt werden können.

Das der Erfindung zugrunde liegende technische Problem besteht darin, ein selbstklebendes Band anzugeben, welches in dem Bereich der Verklebung von ein- oder mehrlagigen Folien im Trockenbau sowie diffusionsoffenen Bahnen und bei der Fugenabdichtung einfach verarbeitet werden kann und darüber hinaus dauerhaft haltbar ist und auf den verschiedensten Bauwerksuntergründen sehr gut haftet.

Dieses technische Problem wird durch ein selbstklebendes Band mit den Merkmalen gemäß Anspruch 1 gelöst.

Das erfindungsgemäße doppelseitig selbstklebende Band zeichnet sich dadurch aus, dass das Klebeband mindestens drei fest miteinander verbundene, jeweils ausgehärtete Funktionsschichten aufweist, dass die mindestens drei Funktionsschichten jeweils als Klebeschicht ausgebildet sind, dass wenigstens zwei auf der wenigstens einen mittleren Funktionsschicht angeordnete Funktionsschichten eine Oberflächenklebrigkeit (Tack) von wenigstens 30 Newton (N) bei +20 °C gemäß DIN EN 1719 aufweisen, und dass die wenigstens eine mittlere Funktionsschicht eine Schälfestigkeit Fmax bei Reißgeschwindigkeit 300 mm/min, bei +20 °C von wenigstens 60 N/25 mm, nach DIN EN 28510-2, aufweist.

Ein weiteres erfindungsgemäßes doppelseitig selbstklebendes Band zeichnet sich dadurch aus, dass das Klebeband mindestens drei fest miteinander verbundene, jeweils ausgehärtete Funktionsschichten aufweist, dass die mindestens drei Funktionsschichten jeweils als Klebeschicht ausgebildet sind, dass wenigstens zwei auf der wenigstens einen mittleren Funktionsschicht angeordnete Funktionsschichten eine Oberflächenklebrigkeit (Tack) von wenigstens 30 Newton (N) bei +20 °C gemäß DIN EN 1719 aufweisen, und dass die wenigstens eine mittlere Funktionsschicht eine Schälfestigkeit Fmax bei Reißgeschwindigkeit 100 mm/min, bei +20 °C von wenigstens 45 N/25 mm, nach DIN EN 28510-2, aufweist.

Ein weiteres doppelseitig selbstklebendes Band zeichnet sich dadurch aus, dass das Klebeband mindestens drei fest miteinander verbundene, jeweils ausgehärtete Funktionsschichten aufweist, dass die mindestens drei Funktionsschichten jeweils als Klebeschicht ausgebildet sind, dass wenigstens zwei auf der wenigstens einen mittleren Funktionsschicht angeordnete Funktionsschichten eine Oberflächenklebrigkeit (Tack) von wenigstens 30 Newton (N) bei +20 °C gemäß DIN EN 1719 aufweisen, und dass die wenigstens eine mittlere Funktionsschicht eine Schälfestigkeit Fmax bei Reißgeschwindigkeit 10 mm/min, bei +20 °C von wenigstens 20 N/25 mm, nach DIN EN 28510-2, aufweist.

Dadurch, dass die auf der mittleren Funktionsschicht angeordneten Funktionsschichten eine hohe Oberflächenklebrigkeit aufweisen und dadurch, dass gleichzeitig die wenigstens eine mittlere Funktionsschicht eine hohe Schälfestigkeit aufweist, weist das erfindungsgemäße Klebeband den Vorteil auf, dass es auf sehr unebenen Untergründen wie auf Stein oder Raufasertapeten oder Strukturputzen sehr gut haftet und dass eine dauerhafte Verklebung, die die Anforderungen im Baubereich erfüllt, erzielt wird.

Wesentliches Merkmal des erfindungsgemäßen Klebebandes ist, dass die einzelnen Funktionsschichten des Klebebandes sehr gut und dauerhaft miteinander verträglich sind und im Herstellungsverfahren optimal miteinander verbunden/kaschiert sind.

Die Prüfung nach DIN EN 1719 wurde durchgeführt mit PET-folienkaschiertem Klebefilm auf Glas, Schlaufentest mit Klebefläche 25 x 25 mm, bei Prüfgeschwindigkeit 300 mm/min.

Das erfindungsgemäße Klebeband zeichnet sich also dadurch aus, dass es zum einen eine hohe Schälfestigkeit und zum anderen eine hohe Oberflächenklebrigkeit aufweist.

Gemäß der Erfindung wird ein Klebeband mit einer doppelseitig klebenden ausgehärteten Masse angegeben, mit der die nötige Haftung zu allen üblichen Materialien im Trockenbau, in der Dach- und Fassadenabdichtung oder in der Fenster- und Türmontage erzielt wird, mit der sämtliche Folien geklebt werden können und mit der eine sofortige Haftung auf den Folien und auf den leicht rauen Bauwerksstoffen erzielt wird.

Das erfindungsgemäße Klebeband ist bei schwankenden Verarbeitungsbedingungen in der Innenanwendung und in der Außenanwendung einsetzbar.

Das erfindungsgemäße Klebeband ist verträglich mit sämtlichen Bauwerksstoffen, mit den üblichen Folien und Folienverbunden. Das erfindungsgemäße Klebeband weist eine sehr hohe Anfangshaftung der geklebten Folie auf, lässt kurzzeitig (weniger als 16 Stunden) nach der ausgeführten Verklebung den Blowerdoor-Test zu und erzielt alterungsbeständige, dauerhafte und hohe Verbundfestigkeiten und Dichtigkeiten. Darüber hinaus ist das erfindungsgemäße Klebeband nicht entsprechend der Verordnung gefährlicher Arbeitsstoffe für Fachbetriebe und Endverbraucher zu kennzeichnen. Weiterhin ist es einfach und rationell zu handhaben.

Gemäß einer besonders bevorzugten Ausführungsform der Erfindung ist das Klebeband ohne Trägerschicht ausgebildet. Das bedeutet, dass sämtliche Funktionsschichten des Klebebandes als Klebeschichten ausgebildet sind. Hierdurch werden die hohe Schälfestigkeit und die hohe Oberflächenklebrigkeit erzielt.

Die Gesamtdicke des Klebebandes beträgt vorteilhaft mindestens 500 µm. Gemäß einer weiteren vorteilhaften Ausführungsform beträgt die Gesamtdicke des Klebebandes maximal 4 mm.

Durch diesen ausgewählten Dickebereich des Klebebandes lässt sich das Klebeband gut handhaben und erzielt dennoch die erforderlichen dauerhaften hohen Verbundfestigkeiten und Dichtigkeiten.

Gemäß einer besonders bevorzugten Ausführungsform der Erfindung liegt die Gesamtdicke des Klebebandes zwischen 0,8 mm und 3 mm. Besonders bevorzugt ist eine Gesamtdicke von 1,5 mm.

Eine weitere vorteilhafte Ausführungsform der Erfindung sieht vor, dass die auf der wenigstens einen mittleren Funktionsschicht angeordneten Funktionsschichten jeweils eine Mindestdicke von 100 µm aufweisen. Die auf der wenigstens einen mittleren Funktionsschicht angeordneten Funktionsschichten weisen eine hohe Oberflächenklebrigkeit auf. Um diese Oberflächenklebrigkeit zu erreichen, ist es ausreichend, eine Schichtdicke von mindestens 100 µm vorzusehen.

Eine weitere vorteilhafte Ausführungsform der Erfindung sieht vor, dass die wenigstens eine mittlere Funktionsschicht eine Mindestdicke von 300 µm aufweist. Die wenigstens eine mittlere Funktionsschicht dient dazu, die hohe Schälfestigkeit des selbstklebenden Bandes zu gewährleisten. Hierfür ist eine Schichtdicke von mindestens 300 µm ausreichend.

Eine weitere bevorzugte Ausführungsform der Erfindung sieht vor, dass das Klebeband wenigstens zwei auf der wenigstens einen mittleren Funktionsschicht angeordnete Funktionsschichten mit einer Mindestdicke von jeweils 100 µm aufweist. So können beispielsweise auf einer Seite der wenigstens einen mittleren Funktionsschicht zwei Funktionsschichten und auf der anderen Seite der wenigstens einen mittleren Funktionsschicht drei Funktionsschichten vorgesehen sein. Es ist auch möglich, das selbstklebende Band symmetrisch aufzubauen, so dass auf der mittleren Funktionsschicht auf jeder Seite wenigstens zwei Funktionsschichten angeordnet sind.

Die mittlere Funktionsschicht weist vorteilhaft eine größere Mindestdicke auf als die auf der wenigstens einen mittleren Funktionsschicht angeordneten Funktionsschichten.

Eine weitere vorteilhafte Ausführungsform der Erfindung sieht vor, dass das Klebeband eine Mindestbreite von 8 mm aufweist. Hierdurch sind viele Laufmeter Klebeverbindung möglich.

Gemäß einer besonders bevorzugten Ausführungsform weist das Klebeband eine Breite von maximal 80 mm auf. Größere Breiten werden unhandlich.

Gemäß einer bevorzugten Ausführungsform der Erfindung weist das Klebeband eine Breite zwischen 10 und 40 mm auf, besonders bevorzugt ist eine Breite zwischen 15 und 25 mm vorgesehen. Diese Breite gewährleistet ein einfaches Arbeiten bei einer guten Handlichkeit des Klebebandes.

Eine besonders bevorzugte Ausführungsform der Erfindung sieht vor, dass das Klebeband von Hand abreißbar ausgebildet ist.

Hierzu können in dem Klebeband vorteilhaft Fasern angeordnet sein. Die Faserstruktur, die in dem selbstklebenden Band angeordnet ist, kann beispielsweise als rechteckige oder rhombusartige textile Struktur ausgebildet sein.

Eine weitere vorteilhafte Ausführungsform der Erfindung sieht vor, dass die Funktionsschichten aus synthetischen Polymeren und/oder Acrylaten bestehen. Diese Klebstoffmassen haben sich als besonders vorteilhaft für die erfindungsgemäße Anwendungsform erwiesen.

Eine weitere vorteilhafte Ausführungsform der Erfindung sieht vor, dass das Klebeband einseitig oder beidseitig mit einem antihaftbeschichteten Trennliner kaschiert ist. Hierdurch ist es möglich, das Klebeband auf einer Rolle oder Spule anzuordnen, ohne dass das Klebeband auf der Rolle oder Spule mit sich selbst verklebt. Vorteilhaft kann ein antihaftbeschichteter, beispielsweise silikonbeschichteter Papiertrennliner verwendet werden.

Die Ausführungsform, dass das Klebeband auf einer Rolle oder Spule vorliegt, ist besonders bevorzugt, da hierdurch die Handhabbarkeit des Klebebandes besonders gut ist.

Die Spule kann vorteilhaft einen oder zwei Flansche aufweisen. Die Anordnung von einem Flansch ist besonders vorteilhaft für die Handhabung. Ist nur noch wenig Klebeband auf der Spule während des Gebrauches vorhanden, ist es bei dem Vorsehen nur eines Flansches einfach, das Ende des Klebebandes von Hand zu fassen und abzuziehen. Die Anordnung von zwei Flanschen an der Spule erschwert die Handhabung des Klebebandes, wenn sich nur noch wenig Klebeband auf der Spule befindet. Zwei Flansche haben Vorteile bei der Lagerung der Spule mit dem Klebeband.

Ist kein Flansch vorgesehen, ist vorteilhaft seitlich an dem Klebeband wenigstens ein antihaftbeschichtetes Abdeckpapier vorgesehen, so dass das auf der Rolle angeordnete Klebeband nicht seitlich ungewollt eine Haftverbindung mit anderen Materialien eingeht.

Eine weitere vorteilhafte Ausführungsform der Erfindung sieht vor, dass das Klebeband mit einem geeigneten Abrollgerät verarbeitbar ausgebildet ist. Hierdurch wird die Handhabbarkeit des erfindungsgemäßen Klebebandes optimiert.

Weitere Merkmale und Vorteile der Erfindung ergeben sich anhand der zugehörigen Zeichnung, in der mehrere Ausführungsbeispiele eines erfindungsgemäßen Klebebandes nur beispielhaft dargestellt sind. In der Zeichnung zeigen:
- Fig. 1: ein selbstklebendes Band mit drei Schichten im Querschnitt;
- Fig. 2: ein selbstklebendes Band mit fünf Schichten im Querschnitt.

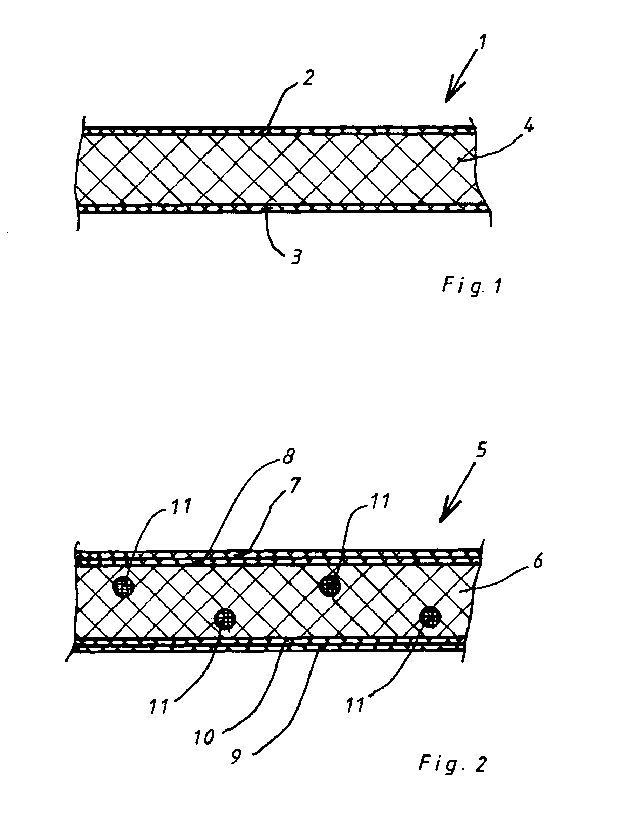

Fig. 1 zeigt ein selbstklebendes Band 1 mit zwei äußeren Funktionsschichten 2, 3 und einer mittleren Funktionsschicht 4. Die äußeren Funktionsschichten weisen eine Dicke von jeweils 200 µm auf, während die mittlere Funktionsschicht 4 eine Dicke von 400 µm aufweist.

Die äußeren Funktionsschichten 2, 3 weisen eine besonders hohe Oberflächenklebrigkeit 4 auf. Die mittlere Funktionsschicht 4 weist eine besonders hohe Schälfestigkeit auf. Das selbstklebende Band 1 hat den Vorteil, dass das Band 1 auf rauen Untergründen und Bauwerkstoffen dicht aufgebracht werden kann und darüber hinaus eine große Haltbarkeit aufweist.

Fig. 2 zeigt ein Band 5, welches wiederum eine mittlere Funktionsschicht 6 aufweist. Auf jeder Seite der mittleren Funktionsschicht 6 sind jeweils zwei weitere Funktionsschichten 7, 8, 9, 10 angeordnet.

Auch bei diesem Aufbau weisen die Funktionsschichten 7, 9 eine hohe Oberflächenklebrigkeit auf, während die mittlere Funktionsschicht 6, 8, 10 eine hohe Schälfestigkeit aufweist.

Die Funktionsschichten 7, 9 weisen eine Dicke von 150 µm und die mittlere Funktionsschicht 6, 8, 10 eine Dicke von 300 µm auf.

Das selbstklebende Band 6 weist Textilfasern 11 auf, um dem Band 6 eine textile Struktur zu verleihen. Durch die Textilfasern 11 ist das Band 6 von Hand abreißbar ausgebildet.

### Bezugszahlen

- 1: Band
- 2: äußere Funktionsschicht
- 3: äußere Funktionsschicht
- 4: mittlere Funktionsschicht
- 5: Band
- 6: mittlere Funktionsschicht
- 7: äußere Funktionsschicht
- 8: innere Funktionsschicht
- 9: äußere Funktionsschicht
- 10: innere Funktionsschicht
- 11: Textilfasern

## Patentansprüche

1. Doppelseitig selbstklebendes Band **dadurch gekennzeichnet dass** das Klebeband (1, 5) mindestens drei fest miteinander verbundene, jeweils ausgehärtete Funktionsschichten (2, 3, 4; 6, 7, 8, 9, 10) aufweist, dass die mindestens drei Funktionsschichten (2, 3, 4; 6, 7, 8, 9, 10) jeweils als Klebeschicht ausgebildet sind, dass die wenigstens zwei auf der wenigstens einen mittleren Funktionsschicht (4; 6, 8, 10) angeordneten Funktionsschichten (2, 3; 7, 9) eine Oberflächenklebrigkeit (Tack) von wenigstens 30 Newton (N) bei +20 °C gemäß DIN EN 1719 aufweisen, und dass die wenigstens eine mittlere Funktionsschicht (4; 6, 8, 10) eine Schälfestigkeit Fmax bei Reißgeschwindigkeit 300 mm/min, bei +20 °C von wenigstens 60 N/25 mm, nach DIN EN 28510-2, aufweist.

2. Doppelseitig selbstklebendes Band, **dadurch gekennzeichne**t dass das Klebeband (1, 5) mindestens drei fest miteinander verbundene, jeweils ausgehärtete Funktionsschichten (2, 3, 4; 6, 7, 8, 9, 10) aufweist, dass die mindestens drei Funktionsschichten (2, 3, 4; 6, 7, 8, 9, 10) jeweils als Klebeschicht ausgebildet sind, dass die wenigstens zwei auf der wenigstens einen mittleren Funktionsschicht (4; 6, 8, 10) angeordneten Funktionsschichten (2, 3; 7, 9) eine Oberflächenklebrigkeit (Tack) von wenigstens 30 Newton (N) bei +20 °C gemäß DIN EN 1719 aufweisen, und dass die wenigstens eine mittlere Funktionsschicht (4; 6, 8, 10) eine Schälfestigkeit Fmax bei Reißgeschwindigkeit 100 mm/min, bei +20 °C von wenigstens 45 N/25 mm, nach DIN EN 28510-2, aufweist.

3. Doppelseitig selbstklebendes Band, **dadurch gekennzeichnet, dass** das Klebeband (1, 5) mindestens drei fest miteinander verbundene, jeweils ausgehärtete Funktionsschichten (2, 3, 4; 6, 7, 8, 9, 10) aufweist, dass die mindestens drei Funktionsschichten (2, 3, 4; 6, 7, 8, 9, 10) jeweils als Klebeschicht ausgebildet sind, dass die wenigstens zwei auf der wenigstens einen mittleren Funktionsschicht (4; 6, 8, 10) angeordneten Funktionsschichten (2, 3; 7, 9) eine Oberflächenklebrigkeit (Tack) von wenigstens 30 Newton (N) bei +20 °C gemäß DIN EN 1719 aufweisen, und dass die wenigstens eine mittlere Funktionsschicht (4; 6, 8, 10) eine Schälfestigkeit Fmax bei Reißgeschwindigkeit 10 mm/min, bei +20 °C von wenigstens 20 N/25 mm, nach DIN EN 28510-2, aufweist.

4. Selbstklebendes Band nach einem der vorhergehenden Ansprüche, **dadurch gekennzeichnet, dass** das Klebeband (4, 6) ohne Trägerschicht aus nicht klebendem Material ausgebildet ist.

5. Selbstklebendes Band nach einem der vorhergehenden Ansprüche, **dadurch gekennzeichnet, dass** die Funktionsschichten (2, 3, 4; 6, 7, 8, 9, 10) aus synthetischen Polymeren und/oder Acrylaten bestehen.

6. Selbstklebendes Band nach einem der vorhergehenden Ansprüche, **dadurch gekennzeichnet, dass** die Gesamtdicke des Klebebandes (1, 5) mindestens 500 µm beträgt.

7. Selbstklebendes Band nach einem der vorhergehenden Ansprüche, **dadurch gekennzeichnet, dass** die Gesamtdicke des Klebebandes (1, 5) maximal 4 mm beträgt.

8. Selbstklebendes Band nach einem der vorhergehenden Ansprüche, **dadurch gekennzeichnet, dass** die Gesamtdicke des Klebebandes (1, 5) zwischen 0,8 mm und 3 mm liegt.

9. Selbstklebendes Band nach einem der vorhergehenden Ansprüche, **dadurch gekennzeichnet, dass** die auf der mittleren Funktionsschicht (4; 6, 8, 10) angeordneten Funktionsschichten (2, 3; 7, 9) jeweils eine Mindestdicke von 100 µm aufweisen.

10. Selbstklebendes Band nach einem der vorhergehenden Ansprüche, **dadurch gekennzeichnet, dass** die wenigstens eine mittlere Funktionsschicht (4; 6) eine Mindestdicke von 300 µm aufweist.

11. Selbstklebendes Band nach einem der vorhergehenden Ansprüche, **dadurch gekennzeichnet, dass** das Klebeband (1, 5) eine Breite von mindestens 8 mm aufweist.

12. Selbstklebendes Band nach einem der vorhergehenden Ansprüche, **dadurch gekennzeichnet, dass** das Klebeband (1, 5) eine Breite von maximal 80 mm aufweist.

13. Selbstklebendes Band nach einem der vorhergehenden Ansprüche, **dadurch gekennzeichnet, dass** das Klebeband (1, 5) eine Breite zwischen 10 und 40 mm aufweist.

14. Selbstklebendes Band nach einem der vorhergehenden Ansprüche, **dadurch gekennzeichnet, dass** das Klebeband (1, 5) eine Breite zwischen 15 und 25 mm aufweist.

15. Selbstklebendes Band nach einem der vorhergehenden Ansprüche, **dadurch gekennzeichnet, dass** das Klebeband (1, 5) abreißbar ausgebildet ist.

16. Selbstklebendes Band nach Anspruch 15, **dadurch gekennzeichnet, dass** in dem Klebeband Fasern (11) angeordnet sind.

17. Selbstklebendes Band nach Anspruch 16, **dadurch gekennzeichnet, dass** in dem Klebeband Textilfasern (11) angeordnet sind.

18. Selbstklebendes Band nach einem der vorhergehenden Ansprüche, **dadurch gekennzeichnet, dass** das Klebeband (1, 5) einseitig oder beidseitig mit einem antihaftbeschichteten Trennliner kaschiert ist.

19. Selbstklebendes Band nach Anspruch 18, **dadurch gekennzeichnet, dass** als Trennliner ein antihaftbeschichteter Papiertrennliner vorgesehen ist.

20. Selbstklebendes Band nach einem der vorhergehenden Ansprüche, **dadurch gekennzeichnet, dass** das Klebeband (1, 5) in Rollenform vorliegt.

21. Selbstklebendes Band nach einem der vorhergehenden Ansprüche, **dadurch gekennzeichnet, dass** das Klebeband (1, 5) auf einer Rolle oder Spule anordbar ist.

22. Selbstklebendes Band nach einem der vorhergehenden Ansprüche, **dadurch gekennzeichnet, dass** das Klebeband (1, 5) auf einer Spule mit einem oder zwei Flanschen anordbar ist.

23. Selbstklebendes Band nach einem der vorhergehenden Ansprüche, **dadurch gekennzeichnet, dass** bei dem auf einer Rolle oder Spule angeordneten Klebeband (1, 5) seitlich wenigstens ein antihaftbeschichtetes Abdeckpapier vorgesehen ist.

24. Selbstklebendes Band nach einem der vorhergehenden Ansprüche, **dadurch gekennzeichnet, dass** das Klebeband (1, 5) mit einem Abrollgerät verarbeitbar ausgebildet ist.
